# EUROPEAN PATENT APPLICATION

(11) **EP 4 353 585 A1**
(43) Date of publication of application: **17.04.2024**
(21) Application number: 23203059.3
(22) Date of filing: 11.10.2023
(51) Int. Cl.: B64C 11/40

(54) **BACK-UP PROTECTION FOR UNCONTROLLED FLUID PRESSURE INCREASE IN PROPELLER CONTROL UNITS**

(30) Priority: 12.10.2022 US 202218045958
(71) Applicant: PRATT & WHITNEY CANADA CORP., Longueuil, Québec J4G 1A1 (CA)
(72) Inventor: KRZYWON, Jagoda, (01BE5) Longueuil, J4G 1A1 (CA); LACHANCE, Benoit, (01BE5) Longueuil, J4G 1A1 (CA); JARVO, James Robert, (01BE5) Longueuil, J4G 1A1 (CA)
(74) Representative: Dehns

(57) **Abstract**

A propeller blade angle control circuit (20) for a turboprop engine includes a propeller control unit (21) controlling a supply of oil to modify an angle of propeller blades (17), a pump (22) located upstream of the propeller control unit (21) and providing the supply of oil from an engine oil return system (13) to the propeller control unit (21), and a flow regulator (30) between the pump (22) and the propeller control unit (21), the flow regulator (30) modulating a supply of oil to the propeller control unit (21). A bypass (40), downstream of the pump (22) in the propeller blade angle control circuit (20), has an inlet fluidly coupled to the pump (22). The bypass (40) is operable between a closed position and an open position in which a portion of the oil supplied to the propeller control unit (21) is diverted away from the propeller blade angle control circuit (20). The open position is engaged when an oil pressure reaches a predetermined threshold.

## Description

### TECHNICAL FIELD

The present disclosure relates generally to turboprop engines and, more particularly, to oil systems for such turboprop engines.

### BACKGROUND

Turboprop engines for aircrafts, which use propellers to provide thrust, have blade angle control systems to control the pitch of the propeller blades and propeller speed. The blade angle control system is actuated by a hydraulic fluid, such as oil, which is supplied under pressure by a pump.

In order to ensure optimal fluid pressure in the control system, a pressure regulating mechanism may be provided. While existing pressure regulating mechanisms are suitable for their purposes, improvements are desired.

### SUMMARY

In one aspect, there is provided a propeller blade angle control circuit, comprising: a propeller control unit controlling a supply of oil to modify an angle of propeller blades; a pump located upstream of the propeller control unit and providing the supply of oil from an engine oil return system to the propeller control unit; a flow regulator between the pump and the propeller control unit, the flow regulator modulating a supply of oil to the propeller control unit; and a bypass downstream of the pump in the propeller blade angle control circuit, the bypass having an inlet fluidly coupled to the pump and operable between a closed position and an open position in which a portion of the oil supplied to the propeller control unit is diverted away from the propeller blade angle control circuit, the open position engaged when an oil pressure in the propeller blade angle control circuit reaches a predetermined threshold.

The propeller blade angle control circuit as defined above and described herein may further include one or more of the following features, in whole or in part, and in any combination.

In certain aspects, the bypass is integrated with the flow regulator.

In certain aspects, the flow regulator is a pressure regulating valve and the bypass includes an inlet disposed within the pressure regulating valve.

In certain aspects, the bypass is operable in the open position when the pressure regulating valve is trapped in a pressure regulating valve closed position.

In certain aspects, the pressure regulating valve is operable to open at a second predetermined oil pressure, and wherein the predetermined oil pressure at which the open position of the bypass is engaged is greater than the second predetermined oil pressure.

In certain aspects, in the open position, the bypass diverts oil to at least one of a reservoir, a (downstream) accessory of an engine, and to an inlet of the pump.

In certain aspects, pump is a fixed-displacement pump.

In certain aspects, the bypass is one of a poppet valve, an electro-hydraulic valve, a relief valve, a bypass valve, a hydraulic valve, and pneumatic valve.

In certain aspects, the bypass is a drain line sealed by a membrane, the membrane operable to break when the oil pressure in the propeller blade angle control circuit reaches the predetermined threshold.

In another aspect, there is provided a propeller blade angle control circuit, comprising: a propeller control unit controlling a supply of oil to modify an angle of propeller blades, the propeller control unit supplied oil by an upstream pump, a flow of the supplied oil modulated by a flow regulator disposed between the pump and the propeller control unit; and a bypass downstream of the pump in the propeller blade angle control circuit, the bypass having an inlet fluidly coupled to the pump and operable between closed position and an open position; wherein in a first operating mode in which an oil pressure of the supplied oil is below a predetermined threshold, the bypass is in a closed position; and wherein in a second operating mode in which an oil pressure of the supplied oil reaches a predetermined threshold, the bypass is in an open position to divert a portion of the supplied oil away from the propeller blade angle control circuit.

The propeller blade angle control circuit as defined above and described herein may further include one or more of the following features, in whole or in part, and in any combination.

The propeller blade angle control circuit as defined in claim 10, wherein the bypass is integrated with the flow regulator.

In certain aspects, the flow regulator is a pressure regulating valve and the bypass includes an inlet disposed within the pressure regulating valve.

In certain aspects, the bypass is operable in the open position when the pressure regulating valve is trapped in a pressure regulating valve closed position.

In certain aspects, the pressure regulating valve is operable to open at a second predetermined oil pressure, and wherein the predetermined oil pressure second operating mode is greater than the second predetermined oil pressure.

In certain aspects, in the second operating mode, the bypass diverts oil to at least one of a reservoir, a downstream accessory, and to an inlet of the pump.

In certain aspects, the pump is a fixed-displacement pump.

In certain aspects, the bypass is one of a poppet valve, an electro-hydraulic valve, a relief valve, a bypass valve, a hydraulic valve, and a pneumatic valve.

In certain aspects, the bypass is a drain line sealed by a membrane, the membrane operable to break when the oil pressure in the propeller blade angle control circuit reaches the predetermined threshold.

In a further aspect, there is provided a method of supplying oil to a propeller control unit of a turboprop engine, comprising: supplying oil to the propeller control unit via an oil pump; modulating an oil pressure of the oil supplied to the propeller control unit at a flow regulator disposed between the oil pump and the propeller control unit; and when the oil pressure reaches a predetermined threshold, engaging a bypass to divert a portion of oil away from the oil supplied to the propeller control unit.

In certain aspects, the method includes engaging the bypass includes diverting oil away from a malfunctioning said flow regulator.

### BRIEF DESCRIPTION OF THE DRAWINGS

Reference is now made to the accompanying figures in which:
FIG. 1 is a schematic cross-sectional view of a gas turbine engine;
FIG. 2 is a schematic view of an oil system of the gas turbine engine of FIG. 1, the oil system having a propeller blade angle control circuit;
FIG. 3 is a schematic view of the propeller blade angle control circuit of FIG. 2;
FIG. 4 is a schematic view of another propeller blade angle control circuit for the oil system of FIG. 2;
FIG. 5 is a schematic view of another propeller blade angle control circuit for the oil system of FIG. 2; and
FIGS. 6A-6C are schematic views of another propeller blade angle control circuit for the oil system of FIG. 2 in different modes of operation.

### DETAILED DESCRIPTION

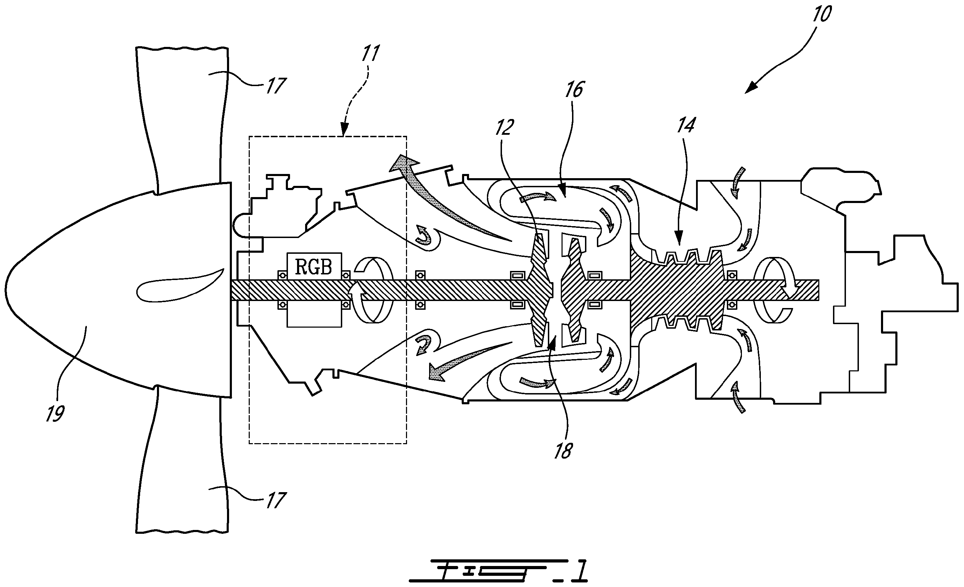

FIG. 1 illustrates a gas turbine engine 10 of a type preferably provided for use in subsonic flight, generally comprising in serial flow communication a compressor section 14 for pressurizing ambient air, a combustor 16 in which the compressed air is mixed with fuel and ignited for generating an annular stream of hot combustion gases, and a turbine section 18 for extracting energy from the combustion gases. A low pressure (LP) turbine 12 drives, via a reduction gear box (RGB), a propeller 19 having propeller blades 17 for providing thrust to the aircraft. An oil system 11 is provided for the gas turbine engine 10, and provides lubrication for the rotating components of the gas turbine engine 10, which include bearings for the rotating turbomachinery (e.g. the compressors, turbines, shafts, and gears), the RGB and the propeller control systems, etc.

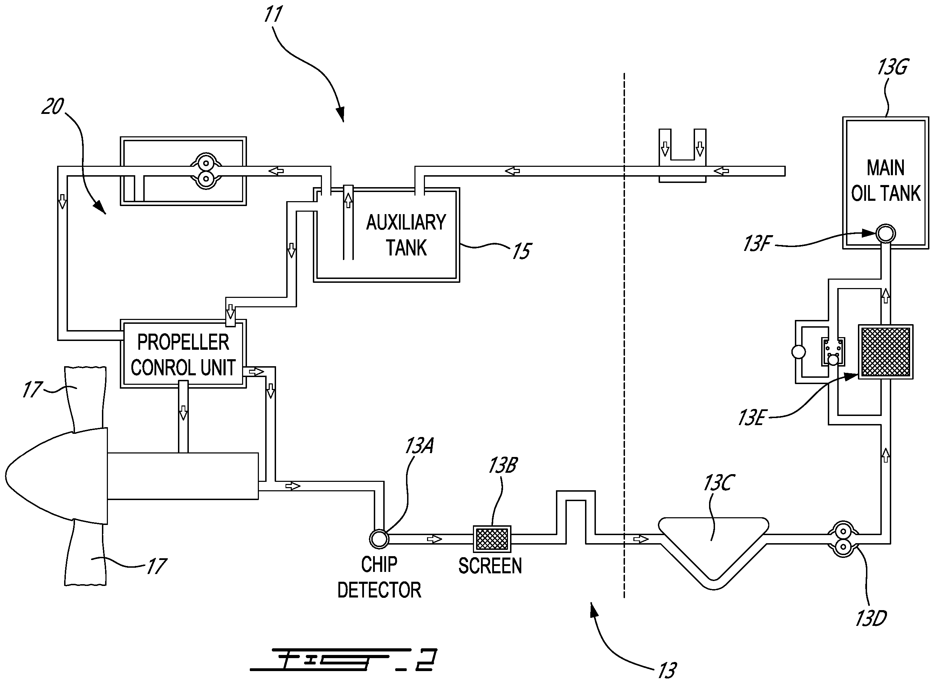

Referring to FIG. 2, the oil system 11 can include any number of components, and any arrangement of components, to provide lubrication to the gas turbine engine 10. One such component, an engine oil return system 13, is shown in the depicted embodiment. The engine oil return system 13 receives used or scavenged oil from the lubricated components of the gas turbine engine, filters and cools the reclaimed oil, and pressurizes it for recirculation to the rotating turbomachinery. In the depicted embodiment, the engine oil return system 13 includes a chip detector 13A to detect the presence of unacceptably-large debris in the oil returning from the propeller 19. The oil and any debris is then filtered with a screen 13B, and then subjected to anti-icing procedures at an anti-icing station 13C. A scavenge pump 13D pressurizes the oil and sends it through another filter 13E before passing through another chip detector 13F before being collected in a main oil tank 13G. From the main oil tank 13G, the oil can be pumped with a supply pump to any number of different components of the oil system 11. For example, oil can be pumped from the supply pump to an auxiliary oil tank 15. The engine oil return system 13 can have more, fewer, and/or different components than those schematically depicted or described above.

In the depicted embodiment, the auxiliary oil tank 15 serves as a source of oil for a propeller blade angle control circuit 20. The oil supplied to the propeller blade angle control circuit 20 (or "control circuit 20") provides hydraulic power to the propeller control circuit 20, allowing it to control the pitch of the variable-pitch propeller blades 17. Stated differently, the control circuit 20 is operable to control one or both of: the blade angle of the propeller blades 17; and the blade speed of the propeller blades 17. The control circuit 20 is thus integrated with, and supplied by, the oil system 11. By being integrated with the oil system 11 of the gas turbine engine, the control circuit 20 is able to use the oil provided by oil system 11 to control the pitch of the propeller blades 17. The oil of the oil system 11 therefore provides a lubricating function, and an actuating function by providing hydraulic power.

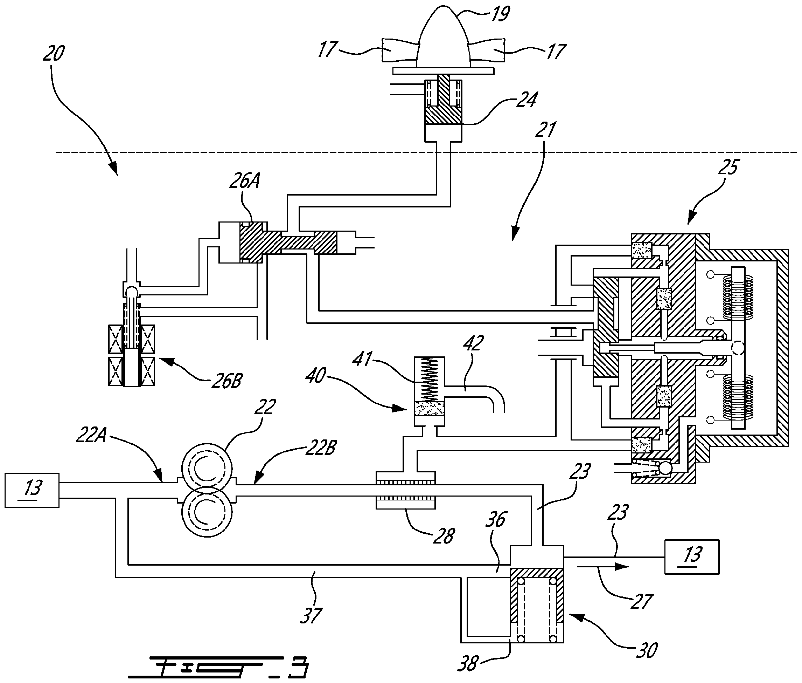

The control circuit 20 is an assembly of fluid lines, connectors, valves, and other components that supply oil to the mechanisms that change the pitch of the propeller blades 17. In the embodiment of FIG. 3, the control circuit 20 has a propeller control unit 21 to effect changes in the pitch of the propeller blades 17, a pump, for instance a fixed-displacement pump 22 which provides oil to the propeller control unit 21, an oil line 23 which helps to divert excess oil to the engine oil return system 13, and a flow regulator 30 which modulates to the flow of oil. In various embodiments, the propeller control unit 21 may be said to include other components such as the flow regulator 30.

The propeller control unit 21 modulates the supply of oil that is used to modify the angle of the propeller blades 17. It can thus have any suitable component, and any suitable arrangement of components, to achieve this functionality. More particularly, the propeller control unit 21 may include different actuators, valves, and other components to adjust the angle of the propeller blades 17. In the depicted embodiment, the propeller control unit 21 has a propeller pitch change actuator 24 which can effect fine and coarse changes in propeller blade 17 pitch. The propeller control unit 21 also has a servo valve 25, for instance an electro-hydraulic servo valve, which controls the pressure of the oil supplied to the pitch change actuator 24. The propeller control unit 21 also has a feather valve 26A supplied with oil by the servo valve 25, and a feather solenoid 26B. The propeller control unit 21 can have more, fewer, and/or different components than those depicted or described above.

The fixed-displacement pump 22 outputs a substantially constant flow rate of oil to the propeller control unit 21. The pump 22 is therefore located within the control circuit 20 upstream of the propeller control unit 21, and acts as a dedicated source of constant hydraulic power. It is typically sized to provide sufficient hydraulic power to satisfy the largest loads of the propeller control unit 21. The pump 22 is supplied with oil from a component of the oil system 11, such as from the engine oil return system 13.

Still referring to FIG. 3, the oil line 23 is a return line which sends excess oil from the pump 22 to the engine oil return system 13. In some cases, the oil line 23 is an oil cooling line. The oil line 23 can therefore be any hose, tube, pipe, or other similar conduit that extends from an outlet 22B of the pump 22 to the engine oil return system 13. It will be appreciated that the oil line 23 may be physically spaced from the outlet 22B of the pump 22 provided that it is fluid communication therewith to receive oil therefrom.

In allowing excess oil to be diverted away from the pump 22 and propeller control unit 21, the oil line 23 defines a leakage path 27 that leads to the engine oil return system 13. "Excess" oil is oil that is supplied by the fixed-displacement pump 22 but that is not required by the propeller control unit 21. Excess oil is typically available during steady-state operation of the propeller 19 (e.g. flight idle, ground idle, etc.), when there is no need to change the pitch of the propeller blades 17. Rather than returning this relatively hot excess oil to an inlet 22A of the pump 22, as is done in some conventional blade angle control systems, the oil line 23 allows the excess oil to be diverted, directly or indirectly, to the engine oil return system 13 where it can be cooled using any of the techniques used to cool the oil being returned from other parts of the oil system 11 (e.g. air-oil heat exchanger, fuel-oil heat exchanger, circulation, etc.). The oil line 23 therefore helps to divert relative hot oil away from the pump 22, thereby reducing the likelihood of damage to the pump 22 caused by overheating. For example, it is known that relative hot oil (i.e. in excess of 275° F (135° C)) may exceed the temperature limits of some of the elastomers used in seals for the pump 22, or of the coils in valves of the pump 22.

Still referring to FIG. 3, the flow regulator 30 governs the amount of oil that is leaked along the leakage path 27 to the engine oil return system 13. The flow regulator 30 is located between the pump 22 and the propeller control unit 21. In the depicted embodiment, the flow regulator 30 is shown downstream of the pump 22, downstream of a wash screen 28, and upstream of the servo valve 25 of the propeller control unit 21. Other configurations are possible. The flow regulator 30 is fluidly connected to the oil line 23, and is operable between an open position and a closed position to selectively allow access to or block, respectively, the leakage path 27 defined by the oil line 23 that leads to the engine oil return system 13. The flow regulator 30 may be a pressure regulating valve, pressure relief valve, pressure control valve or other like flow regulating mechanism.

In the open position, the flow regulator 30 allows access to the leakage path 27 and directs oil through the oil line 23 and along the leakage path 27 toward the engine oil return system 13 so that the oil can be cooled. In this position, where oil is diverted along the leakage path 27, the flow regulator 30 is regulating the pressure of the oil supplied to the propeller control unit 21 and diverting excess oil toward the engine oil return system 13. The flow regulator 30 will typically, but not exclusively, operate in the open position during steady-state operation of the propeller 19. During steady-state operation, there is less of a demand from the pitch change actuator 24 responsible for changing the angle of the propeller blades 17. Therefore, "steady-state" refers to relatively little or no demand for hydraulic power from the downstream propeller control unit 21. A cooling oil flow diversion can thus be provided by the flow regulator 30 during steady-state operation.

In the closed position, the flow regulator 30 blocks access to the leakage path 27. Oil is thus instead directed entirely toward the propeller control unit 21 to effect changes in the angle of the propeller blades 17. In this position, where oil is prevented from being diverted along the leakage path 27, substantially all of the hydraulic power supplied by the pump 22 is available for the propeller control unit 21 to make the required changes in propeller blade 17 pitch. This is in contrast to some conventional blade angle control systems, which allow leaking flow back to the engine oil return even during high load manoeuvres. The flow regulator 30 will typically, but not exclusively, operate in the closed position during transient operation of the propeller 19. During transient operation, there is a relatively high demand for hydraulic power. Some examples of transient flow regimes include accommodating for large changes in engine power, moving the engine into or out of reverse, or feathering or unfeathering the propeller 19. Therefore, "transient" refers to relatively high demand for hydraulic power from the downstream propeller control unit 21.

If the flow regulator 30 were to fail or malfunction, for instance jamming or becoming trapped in its closed position, the oil pressure in the control circuit 20, and more particularly the pressure of the oil supplied to the servo valve 25, may become too high. This may prevent the servo valve 25 from operating as expected, which may lead to various instances of failure. As such, in various embodiments, a bypass 40 may be introduced into the control circuit 20 to allow the oil pressure to be reduced if the oil pressure in the control circuit 20 were to reach or exceed a predetermined threshold. The predetermined threshold may be selected, for instance, to be high enough to prevent inadvertent engagement of the bypass 40, but low enough so that the propeller control unit 21, and in particular the servo valve 25, may remain active, despite failure in the flow regulator 30, without the risk of any damage to the various components of the propeller control unit 21. By "high enough to prevent inadvertent engagement of the bypass 40", it is understood that the flow regulator 30 may be operable to open once a given oil pressure in the control circuit 20 is reached. The predetermined threshold must therefore be set higher than the oil pressure at which the flow regulator 30 would ordinarily open, as the bypass 40 is operable to open should the flow regulator 30 fail. The predetermined threshold may be set low enough so that other components in the control circuit 20 remain unaffected. For instance, setting the threshold low enough may minimize risks of oil leakage through various internal and external sealings and of damage to the pump 22. The bypass 40 may be referred to as a mechanical bypass, as it includes a mechanism that is operable to open and/or break (for instance a spring or a membrane) once the oil pressure associated with the predetermined threshold has been reached. Various such mechanisms may be contemplated, as will be discussed in further detail below.

Still referring to FIG. 3, in some embodiments the bypass 40 may include a valve 41 disposed in the control circuit 20 and operable to open to reduce the oil pressure in the control circuit 20 upon the oil pressure in the control circuit 20 reaching or exceeding a predetermined value. Various valve types may be contemplated, for instance a poppet valve, an electro-hydraulic valve, a relief valve, a bypass valve, a hydraulic valve, pneumatic valve, or any other valve which is operable to open once a predetermined oil pressure has been reached for oil pressure reduction. In other cases, the bypass 40 may include an oil drain line having a membrane sealing or blocking its inlet and operable to open or break by the force of the oil acting against it once the predetermined oil pressure has been reached or exceeded. In some cases, for instance where bypass 40 includes a spring-biased valve 41, the bypass is re-usable as the oil pressure fluctuates in the control circuit. In other cases, for instance where bypass 40 includes a breakable membrane, the bypass 40 may be considered a single-use bypass.

A conduit 42 of the bypass 40 may direct the diverted oil to a variety of locations in the engine 10. For instance, the oil may be diverted to a reservoir such as at the reduction gearbox housing, the oil sump, an external reservoir, or to any other internal or external reservoir which can collect the drained oil and/or divert the drained oil into another oil system or subsystem. Additionally or alternatively, oil can be diverted to the main oil lines of the control circuit 20, to the main oil lines of the engine 10 or to any other of any engine oil line. In some embodiments, the conduit 42 may fluidly connect the valve 41 to the inlet of a pump such as pump 22, to a downstream accessory in the engine 10, or to any other location within one of the engine 10's oil systems. The conduit may be operable to direct the diverted oil the multiple locations within the engine 10.

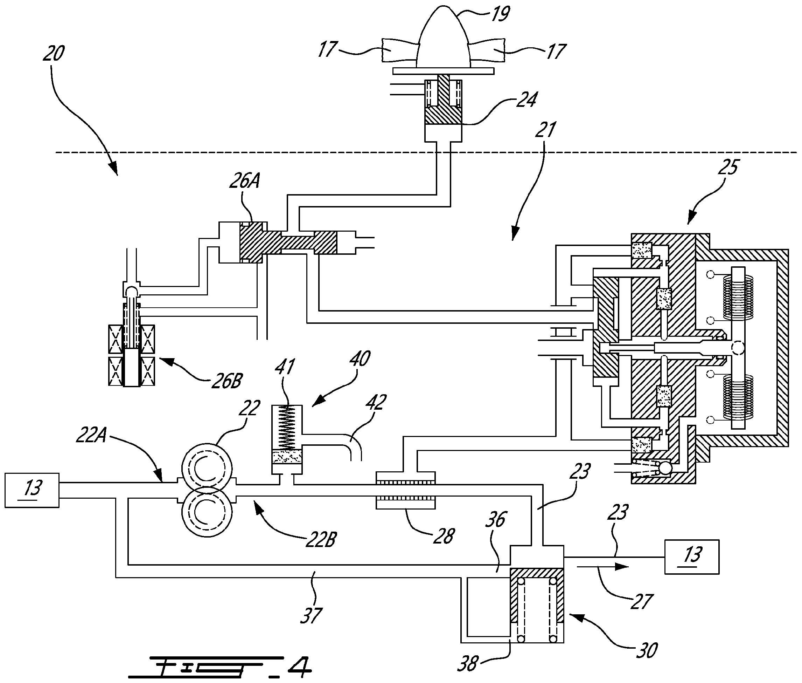

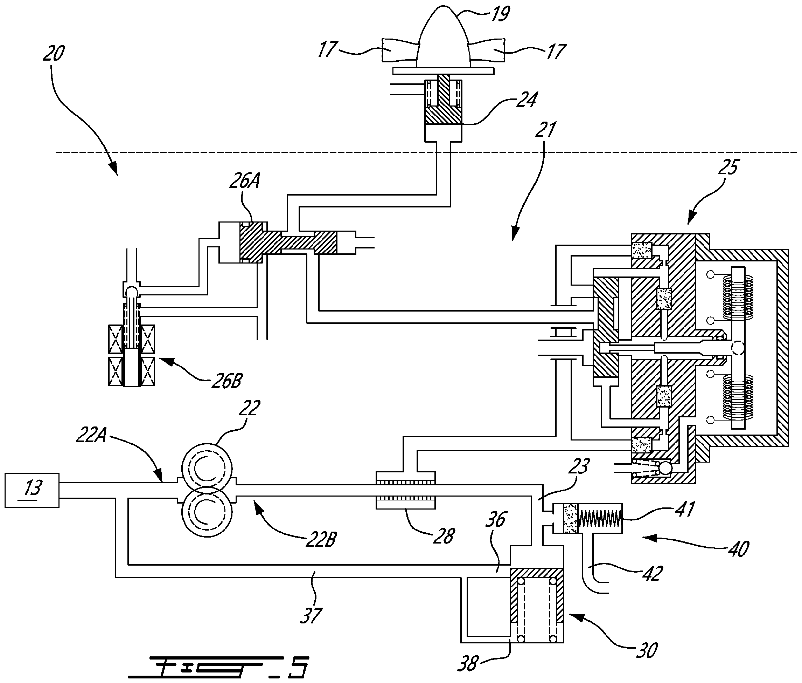

The valve 41 may be disposed in a variety of locations within the control circuit 20. In the embodiment shown in FIG. 3, the valve 41 is shown to be disposed downstream of the wash screen 28 and upstream of the servo valve 25. Referring to FIG. 4, the valve 41 is disposed downstream of the pump 22 and upstream of the wash screen 28. Referring to FIG. 5, the valve 41 is disposed just upstream of the inlet to the flow regulator 30. Other locations for the valve 41 may be contemplated.

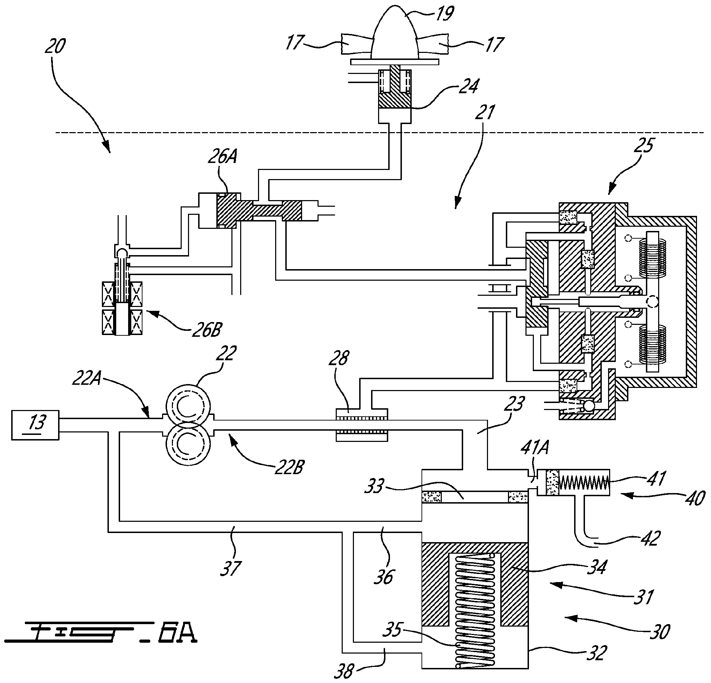

Referring to FIGS. 6A-6C, in another embodiment, the valve 41 may be integrated or incorporated within the flow regulator 30. Illustratively, the flow regulator 30 includes a pressure regulating valve 31, or "PRV". The PRV 31 has a housing 32 with an inlet aperture 33. The inlet aperture 33 is in fluid communication with an outlet 22B of the pump 22. An outlet 36 in the housing 32 is in fluid communication with the pump via return line 37 and/or the engine oil return system 13 via the oil leakage path 27 (see FIGS. 3-5). Illustratively, return line 37 fluidly couples the outlet of the housing 32 to the pump inlet 22A. In some cases, the oil return system 13 may include the return line 37. A sensing line 37 may additionally exit the housing 32 before joining the return line 37. An inlet 41a of the valve 41 is disposed inside PRV 31 immediately upstream of the inlet aperture 33 within the housing 32, although other locations within the PRV 31 (or other like flow regulator 30) may be contemplated.

The PRV 31 has a spool 34 within the housing 32 that is displaceable relative to the housing 32 and is biased by a spring 35. The pressurized oil displaces the spool 34 within the housing 32 so that it blocks and exposes at least the inlet aperture 33. In the depicted embodiment, the spool 34 is not capable of fully blocking the outlet aperture such that oil can always drain to the engine oil return system 13 along the leakage path 27. Similarly, as the inlet 41a to the valve 41 is upstream of the inlet aperture 33, the spool 34 is not capable of fully blocking the inlet 41a to the valve 41 so that the valve 41 may divert oil should the PRV 31 fail.

Referring to FIG. 6A, the PRV 31 is shown in an open position, while the valve 41 is shown in a closed position. In this position, the force applied by the pressurized oil at the inlet aperture 33 exceeds the biasing force of the spring 35. This causes the spool 34 to displace away from the inlet aperture 33. Oil can then enter into the housing 32 via the inlet aperture 33, and exit the housing 32 via the outlet aperture along the leakage path 27 to be cooled (see FIGS. 3-5). The PRV 31 is thus open, and is regulating the pressure of the oil supplied to the propeller control unit 21. As the oil pressure is being regulated to a sufficient degree, i.e., the predetermined oil pressure discussed above has not been reached or exceeded, the valve 41 is closed.

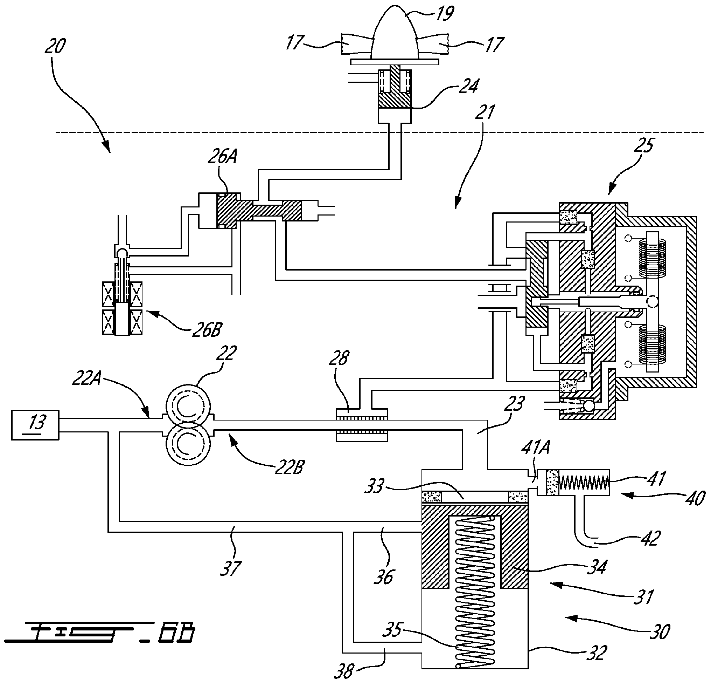

Referring to FIG. 6B, both the PRV 31 and the valve 41 are shown in closed positions. the force applied by the pressurized oil at the inlet aperture 33 is less than the biasing force of the spring 35. The spool 34 is therefore biased toward the inlet aperture 33 to block and seal the inlet aperture 33. Oil is therefore prevented from entering into the housing 32 via the inlet aperture 33, and thus prevented from flowing along the leakage path 27 to be cooled. The PRV 31 is thus closed, and is thus not regulating the pressure of the oil supplied to the propeller control unit 21. The PRV 31 may operate in this closed position during transient propeller manoeuvres, for example, such as when large propeller blade angle movements are demanded. The leakage path 27 to the engine oil return system 13 is thus closed off. In this position, while the PRV 31 may not be regulating the oil pressure, this is intentional so that the propeller control unit 21 may receive oil at a sufficient pressure for its operation. This predetermined oil pressure at which the valve 41 would open would thus be set to be above this sufficient pressure, and thus the valve 41 remains closed.

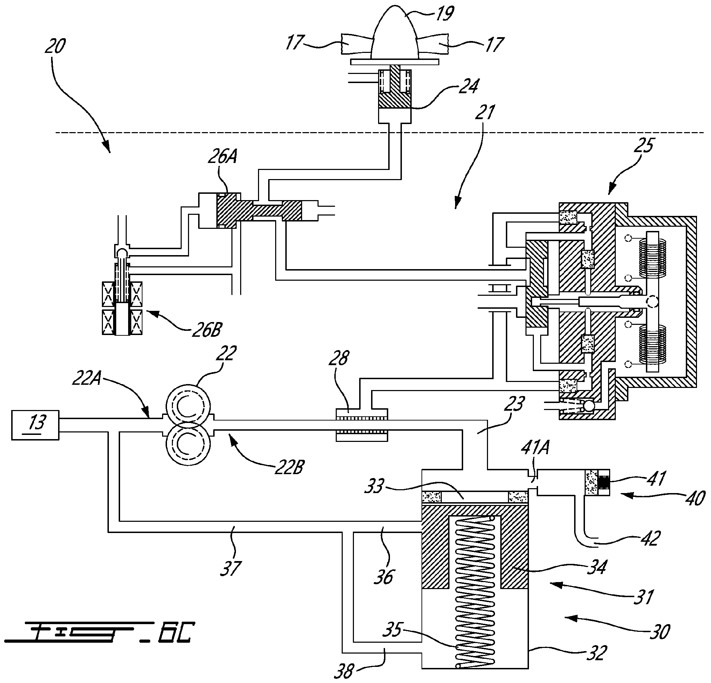

Referring to FIG. 6C, if the oil pressure in the control circuit 20 were to reach or exceed the predetermined threshold and the PRV 31 is unable to fulfill its role of regulating the oil pressure (for instance, it has failed and is stuck in its closed position), the valve 41 is opened to drain the oil entering the PRV 31 and thus reduce the oil pressure in the control circuit 20. Once open, the valve 41 may allow the control circuit 20 to continue operating, despite the PRV 31's failure.

The bypass 40 may thus operate between a first operating mode and a second operating mode. In the first operating mode, where the oil pressure of the oil in the control circuit 20 is below the predetermined threshold, the bypass 40 is in a closed position and no oil is diverted via the bypass. In the second operating mode, where the oil pressure of the oil in the control circuit 20 meets or exceeds the predetermined threshold, the bypass 40 is in an open position whereby a portion of the oil is diverted away from the control circuit 20, as discussed above.

The present disclosure further teaches a method of supplying oil to a propeller control unit 21 of a turboprop engine 10. Oil is supplied to the propeller control unit 21 via an oil pump 22. An oil pressure of the oil supplied to the propeller control unit 21 is modulated at a flow regulator 30 disposed between the oil pump 22 and the propeller control unit 21. When the oil pressure reaches a predetermined threshold, a bypass 40 is engaged to divert a portion of oil away from the oil supplied to the propeller control unit 21. Various modifications to this method may be contemplated.

It is understood that the various systems shown in the Figures are for illustrative purposes and are not drawn to scale.

The embodiments described in this document provide non-limiting examples of possible implementations of the present technology. Upon review of the present disclosure, a person of ordinary skill in the art will recognize that changes may be made to the embodiments described herein without departing from the scope of the present technology. For instance, while the above disclosure is directed towards a bypass for a propeller blade angle control circuit, it is understood that the same principles can be applied in other engine systems to improve the reliability of other hydraulic and hydromechanical systems, such as like fuel-control units, and inlet guide vane actuation systems. Yet further modifications could be implemented by a person of ordinary skill in the art in view of the present disclosure, which modifications would be within the scope of the present technology.

## Claims

1. A propeller blade angle control circuit (20), comprising:
a propeller control unit (21) controlling a supply of oil to modify an angle of propeller blades (17);
a pump (22) located upstream of the propeller control unit (21) and providing the supply of oil from an engine oil return system (13) to the propeller control unit (21);
a flow regulator (30) between the pump (22) and the propeller control unit (21), the flow regulator (30) modulating a supply of oil to the propeller control unit (21); and
a bypass (40) downstream of the pump (22) in the propeller blade angle control circuit (20), the bypass (40) having an inlet fluidly coupled to the pump (22) and operable between a closed position and an open position in which a portion of the oil supplied to the propeller control unit (21) is diverted away from the propeller blade angle control circuit (20), the open position engaged when an oil pressure in the propeller blade angle control circuit (20) reaches a predetermined threshold.

2. The propeller blade angle control circuit (20) as defined in claim 1, wherein the bypass (40) is integrated with the flow regulator (30).

3. The propeller blade angle control circuit (20) as defined in claim 2, wherein the flow regulator (30) is a pressure regulating valve (31) and the bypass (40) includes an inlet disposed within the pressure regulating valve (31).

4. The propeller blade angle control circuit (20) as defined in claim 3, wherein the bypass (40) is operable in the open position when the pressure regulating valve (31) is trapped in a pressure regulating valve (31) closed position.

5. The propeller blade angle control circuit (20) as defined in claim 3 or 4, wherein the pressure regulating valve (31) is operable to open at a second predetermined oil pressure, and the predetermined oil pressure at which the open position of the bypass (40) is engaged is greater than the second predetermined oil pressure.

6. The propeller blade angle control circuit (20) as defined in any of the preceding claims, wherein, in the open position, the bypass (40) diverts oil to a reservoir, an accessory, and/or to an inlet of the pump (22).

7. The propeller blade angle control circuit (20) as defined in any of the preceding claims, wherein the pump (22) is a fixed-displacement pump (22).

8. The propeller blade angle control circuit (20) as defined in any of the preceding claims, wherein the bypass (40) is a poppet valve, an electro-hydraulic valve, a relief valve, a bypass valve, a hydraulic valve, or a pneumatic valve.

9. The propeller blade angle control circuit (20) as defined in any of claims 1 to 7, wherein the bypass (40) is a drain line sealed by a membrane, the membrane operable to break when the oil pressure in the propeller blade angle control circuit (20) reaches the predetermined threshold.

10. The propeller blade angle control circuit (20) as defined in any of the preceding claims, wherein:
in a first operating mode in which an oil pressure of the supplied oil is below a predetermined threshold, the bypass (40) is in a closed position; and
in a second operating mode in which an oil pressure of the supplied oil reaches a predetermined threshold, the bypass (40) is in an open position to divert a portion of the supplied oil away from the propeller blade angle control circuit (20).

11. A method of supplying oil to a propeller control unit (21) of a turboprop engine (10), comprising:
supplying oil to the propeller control unit (21) via an oil pump (22);
modulating an oil pressure of the oil supplied to the propeller control unit (21) at a flow regulator (30) disposed between the oil pump (22) and the propeller control unit (21); and
when the oil pressure reaches a predetermined threshold, engaging a bypass (40) to divert a portion of oil away from the oil supplied to the propeller control unit (21).

12. The method as defined in claim 11, wherein engaging the bypass (40) includes diverting oil away from a malfunctioning said flow regulator (30).
